# FASCICULE DE BREVET EUROPEEN

(11) **EP 3 544 410 B1**
(45) Date de publication et mention de la délivrance du brevet: **08.11.2023**
(21) Numéro de dépôt: 17817782.0
(22) Date de dépôt: 23.11.2017
(51) Int. Cl.: A01G 9/02, A01G 27/00

(54) **DISPOSITIF DE CULTURE VÉGÉTALE**
PFLANZENZUCHTVORRICHTUNG
PLANT CULTIVATION DEVICE

(30) Priorité: 25.11.2016 FR 1661528
(43) Date de publication de la demande: 02.10.2019
(73) Titulaire: Veritable, 07000 Lyas (FR)
(72) Inventeur: GEHIN, Nicolas, 69300 Caluire-et-Cuire (FR); VERNEUIL, Chloé, 69300 Caluire-et-Cuire (FR)
(74) Mandataire: Germain Maureau
(86) Numéro de dépôt international: PCT/FR2017/053233
(87) Numéro de publication internationale: WO 2018/096283

(56) Documents cités:
- EP-A2- 1 894 466
- WO-A1-2005/058016
- WO-A1-2008/143525
- WO-A1-2014/175728
- FR-A1- 2 971 117
- TW-U- M 342 738
- US-A1- 2007 271 841
- US-A1- 2012 186 155

## Description

La présente invention concerne un dispositif de culture végétale.

Il est connu de cultiver des végétaux en pots. Par exemple, le document EP 1 894 466 décrit un pot pour la culture de plantes. Contrairement à une culture en pleine terre, ce mode de culture peut nécessiter une irrigation plus importante. En effet, le substrat présent dans le pot ne présente pas une épaisseur suffisante pour retenir l'eau. Une solution classique consiste à irriguer régulièrement en versant de l'eau sur le substrat. Cependant, ce mode d'irrigation a tendance à lixivier le substrat.

Pour pallier ce problème, il est connu d'utiliser un récipient au fond duquel débouchent des tubes d'irrigation, récipient lui-même placé dans un bac contenant de l'eau. L'irrigation se fait alors par le bas du substrat, par capillarité, sans risque que l'eau ne chasse tous les nutriments du substrat.

Cependant, il est fréquent que les racines des végétaux s'engouffrent dans les tubes d'irrigation et les obstruent. Ceci n'est pas souhaitable pour plusieurs raisons : cela gêne la remontée d'eau vers le végétal, ainsi que les échanges gazeux nécessaires à la bonne croissance des végétaux au niveau racinaire ; cela peut gêner le fonctionnement de certains organes du système global de culture végétal, par exemple le flotteur permettant de détecter le niveau d'eau dans le bac ; par ailleurs, les racines peuvent former un réseau enchevêtré empêchant le retrait aisé du substrat portant le végétal, lorsque l'utilisateur le souhaite.

Dans ce contexte technique, la présente invention a pour objectif de fournir un dispositif de culture végétale permettant de maintenir les tubes d'irrigation sensiblement dégagés des racines.

Selon une définition générale, l'invention concerne un dispositif de culture végétale qui comprend un récipient qui présente au moins une paroi périphérique et une paroi de fond, et qui comporte au moins un tube d'irrigation pouvant contenir une mèche permettant la remontée d'eau par capillarité, le ou chaque tube d'irrigation débouchant dans un trou ménagé dans la paroi de fond. Une région de la paroi de fond autour du, ou de chaque, trou comprend des moyens de guidage adaptés pour guider des racines d'un végétal autour du trou correspondant pour maintenir le tube d'irrigation sensiblement dégagé. Les moyens de guidage comprenant au moins une nervure adaptée pour guider les racines d'un végétal, la ou chaque nervure faisant saillie de la paroi de fond vers l'intérieur du récipient, au moins une nervure entourant partiellement le trou correspondant en créant une zone qui entoure le trou et en laissant une ouverture, de sorte à permettre aux racines de tourner autour du trou en suivant sensiblement la ou chaque nervure puis de sortir des moyens de guidage.

D'une manière particulièrement avantageuse, les moyens de guidage permettent de détourner les racines du trou de manière à laisser le tube d'irrigation dégagé. En d'autres termes, les moyens de guidage permettent d'éviter que les racines n'obstruent le tube d'irrigation.

De façon concrète, afin de créer une zone qui entoure le trou, la ou chaque nervure n'est pas située sur le bord du trou, mais à distance du trou. L'ouverture permet aux racines qui se seraient approchées du trou en passant par l'ouverture ou par-dessus la nervure de sortir de l'espace formé par les moyens de guidage, après avoir grandi en suivant sensiblement la nervure, du côté intérieur de cet espace.

Selon une réalisation possible, afin d'éviter que les racines ne pénètrent dans la zone formée par la nervure et entourant le trou, et/ou afin de permettre aux racines qui auraient pénétrer cette zone d'en sortir, on peut prévoir l'une et/ou l'autre des dispositions suivantes :
- le rapport L/d de la largeur de l'ouverture sur le diamètre du trou est compris entre L/d min et L/d max, où L/d min vaut 1, de préférence 1,3, et L/d max vaut 2,7, de préférence 2,5, de préférence 2 ;
- le secteur angulaire ayant pour sommet le centre du trou et délimité par des demi droites passant par les extrémités de l'ouverture forme un angle (α) compris entre αmin et αmin, où αmin vaut 35°, de préférence 45°, de préférence 55°, et αmax vaut 90°, de préférence 80°, de préférence 70°.

Au moins une nervure peut présenter une géométrie sensiblement en forme de fer à cheval, c'est-à-dire globalement en forme de C.

La, ou chaque, nervure sensiblement en forme de fer à cheval peut comprendre, une portion incurvée positionnée autour du trou et présentant deux extrémités et, deux branches sensiblement parallèles prolongeant chacune une extrémité de la portion incurvée, de sorte que l'ouverture forme un rétrécissement de section. Le rétrécissement de section permet de limiter l'entrée des racines dans les moyens de guidage.

Au moins une nervure peut présenter une géométrie sensiblement rectiligne.

Les moyens de guidage peuvent comprendre trois nervures sensiblement rectilignes, agencées pour former sensiblement un U.

Le U peut comprendre deux nervures latérales et une nervure de base, la nervure de base présentant une hauteur par rapport à la paroi de fond supérieure à la hauteur des nervures latérales par rapport à la paroi de fond.

Au moins une nervure peut présenter au moins une face oblique par rapport à la paroi de fond. La face oblique permet de faciliter le trajet des racines en leur permettant de passer au-dessus de la nervure, en formant une sorte de rampe.

Les moyens de guidage peuvent comprendre une collerette encerclant le trou, par exemple au voisinage immédiat du contour du trou. La collerette constitue un moyen supplémentaire permettant de détourner les racines du trou.

L'invention porte aussi sur une cartouche comprenant un substrat, adaptée pour être positionnée dans un récipient tel que précédemment décrit, et qui présente une face inférieure comprenant au moins un relief adapté pour coopérer avec les moyens de guidage du récipient.

Il est précisé que, dans le présent document, par « substrat » on entend un support de culture composé de matériaux qui peuvent être organiques (comme par exemple la fibre de coco ou la tourbe) ou non organique (comme par exemple la laine de roche) dans lequel un végétal peut puiser les éléments nécessaires à sa croissance (minéraux, eau, gaz, etc.).

La présence sur la cartouche d'au moins un relief adapté pour coopérer avec les moyens de guidage du récipient permet à la cartouche d'être montée dans un dispositif selon l'invention, et de tirer pleinement profit des avantages conférés par les moyens de guidage du récipient. Par « adapté », on entend que le relief et les moyens de guidage peuvent coopérer, sans qu'il y ait nécessairement similarité des formes de ces deux éléments. De façon concrète, la coopération entre le relief et les moyens de guidage peut se traduire de l'une et/ou l'autre des façons suivantes :
- le relief est au moins partiellement logé dans ou loge au moins en partie les moyens de guidage. En particulier, si les moyens de guidage créent une zone qui entoure le trou ménagé dans la paroi de fond du récipient et qui est pourvue d'une ouverture, le relief peut occuper au moins partiellement ladite zone ; le relief peut en outre s'étendre au-delà de la zone en passant par l'ouverture ; un seul relief peut être prévu pour coopérer avec plusieurs de ces zones, ou un relief donné peut ne coopérer qu'avec une seule de ces zones ;
- le relief est conformé pour permettre l'irrigation de la cartouche, c'est-à-dire que, lorsque la cartouche est placée dans le récipient, il permet la remontée d'eau via le tube d'irrigation, jusqu'à la cartouche. Le relief peut ainsi être défini comme un « relief d'irrigation ». A cet effet, de préférence, une partie inférieure de la cartouche est en contact avec ou à proximité immédiate du trou, lorsque la cartouche est placée dans le récipient ; il peut s'agir de la face inférieure du relief, par exemple s'il est en saillie par rapport à la face inférieure de la cartouche ; en variante, il peut s'agir de la face inférieure de la cartouche, par exemple sensiblement plane et en contact avec la paroi de fond du récipient, si le relief est une empreinte en retrait par rapport à ladite face inférieure de la cartouche.
- de façon concrète, la cartouche peut « s'emboîter » dans les moyens de guidage, que leurs formes respectives soient sensiblement identiques ou seulement compatibles pour une coopération.

Au moins un relief peut être une empreinte, et/ou au moins un relief peut être une saillie.

Au moins un relief peut présenter une géométrie complémentaire de la géométrie des moyens de guidage. Il est précisé que dans le présent document, par « géométrie complémentaire », on entend une géométrie correspondant à une image inverse des moyens de guidage.

Au moins un relief peut présenter une empreinte sensiblement en forme de fer à cheval complémentaire de la géométrie de la nervure sensiblement en forme de fer à cheval.

La cartouche peut comprendre au moins une semence végétale. La, ou chaque, semence végétale peut être disposée dans au moins un logement débouchant à l'extérieur de la cartouche. Le, ou chaque, logement peut être obturé par un opercule fixé à la cartouche, par exemple formé d'une feuille présentant au moins un point de colle permettant de fixer la feuille à la cartouche.

Par ailleurs, la cartouche peut comprendre au moins un produit fertilisant.

L'invention porte aussi sur un ensemble qui comprend un dispositif, par exemple tel que précédemment décrit et une cartouche, par exemple du type précédemment décrit.

L'invention porte aussi sur un système de culture végétale qui comprend :
- un bac présentant une ouverture supérieure, le bac étant destiné à contenir de l'eau ;
- un plateau disposé au niveau de l'ouverture supérieure du bac et présentant une fenêtre ;
- au moins un mât supportant au moins une source lumineuse ;
- au moins un ensemble selon l'invention, disposé dans le bac et reçu dans la fenêtre.

D'autres caractéristiques et avantages de l'invention se dégageront de la description qui va suivre au regard des dessins ci-annexés.
La figure 1 est une vue en perspective, partielle, d'un dispositif de culture végétale selon l'invention ;
La figure 2 est une vue en perspective détaillée d'un mode de réalisation des moyens de guidage selon l'invention ;
Les figures 3 et 4 sont des vues schématiques de moyens de guidage qui ne font pas partie de l'invention ;
Les figures 5 à 8 sont des vues schématiques de différents modes de réalisation des moyens de guidage selon l'invention ;
La figure 9 est une vue en perspective d'une cartouche selon l'invention présentant un relief selon un mode de réalisation;
La figure 10 est une vue en perspective schématique d'un autre mode de réalisation du relief d'une cartouche selon l'invention ;
La figure 11 est une vue en perspective d'une cartouche selon l'invention ;
La figure 12 est une vue en perspective d'un ensemble selon l'invention, comprenant un dispositif de culture végétale et une cartouche ;
La figure 13 est une vue en coupe de l'ensemble de la figure 12 ;
La figure 14 est une vue en perspective d'un système de culture selon l'invention.

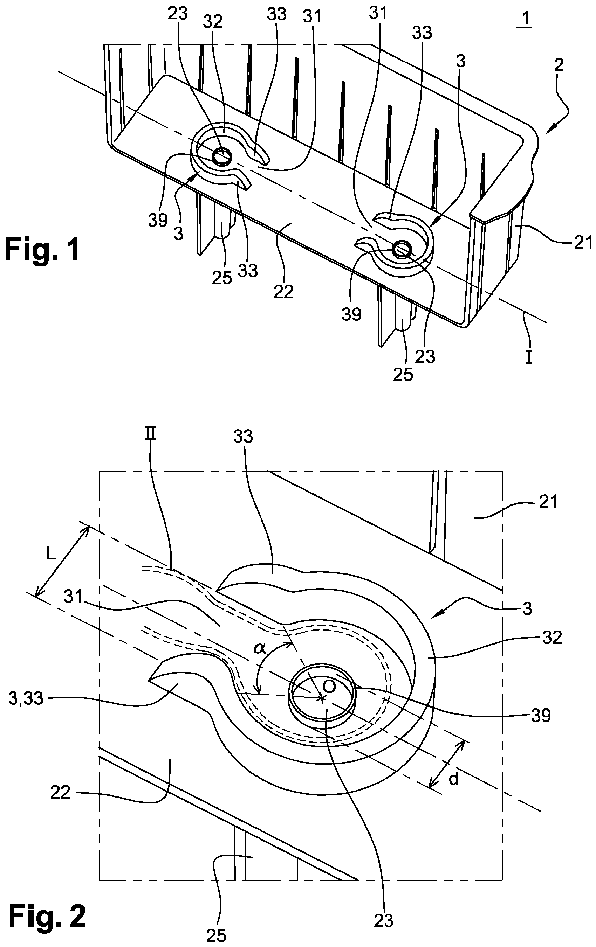

En référence à la figure 1, l'invention concerne un dispositif 1 de culture végétale qui comprend un récipient 2.

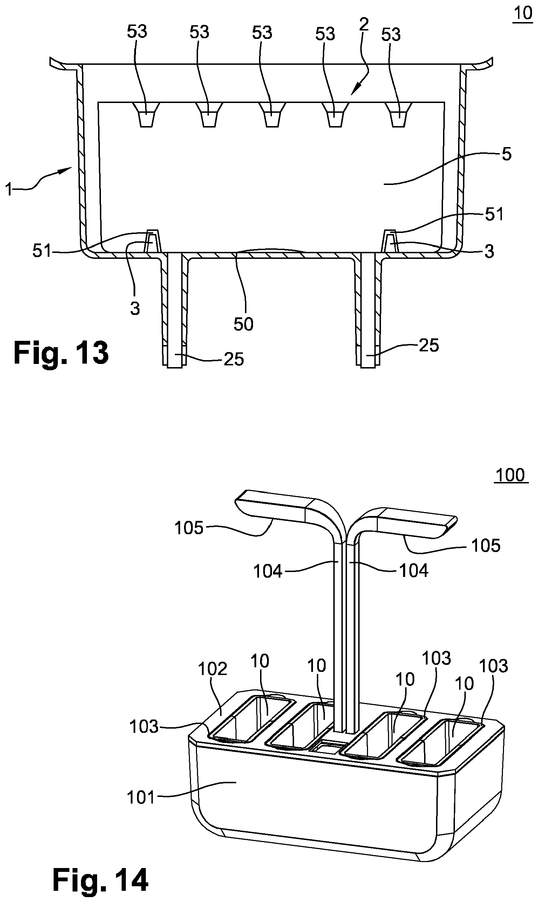

Le récipient 2 est destiné à être placé dans un système 100 de culture végétale tel que représenté sur la figure 14. Ce système 100 comprend :
- un bac 101 présentant une ouverture supérieure, le bac étant destiné à contenir de l'eau ;
- un plateau 102 disposé au niveau de l'ouverture supérieure du bac 101 et présentant une ou plusieurs fenêtres 103 ;
- au moins un mât 104 supportant au moins une source lumineuse 105 ;
- un récipient 2 disposé dans le bac 101 et reçu dans chacune des fenêtres 103, le récipient 2 étant destiné à recevoir une cartouche 5 pour permettre la culture d'un végétal.

Le récipient 2 présente une paroi périphérique 21 et une paroi de fond 22. Selon les exemples ici présentés, le récipient 2 présente une géométrie sensiblement parallélépipédique rectangulaire, avec un axe longitudinal I. Selon d'autres modes de réalisation, le récipient 2 pourrait par exemple être cubique, cylindrique ou de forme prismatique quelconque.

Le récipient 2 peut être réalisé en matériau polymère ou en aluminium, ou en un autre matériau.

Selon l'exemple ici présenté, la paroi de fond 22 présente deux trous 23 débouchant chacun dans un tube d'irrigation 25 pouvant contenir une mèche (non représentée) permettant la remontée d'eau, par capillarité, depuis le bac 101 vers le récipient 2 et la cartouche 5. Selon d'autres modes de réalisation, la paroi de fond 22 peut présenter un nombre inférieur ou supérieur de trous 23.

Une région de la paroi de fond autour de chaque trou 23 comprend des moyens de guidage adaptés pour guider des racines du végétal - ayant poussé dans la cartouche 5 - autour du trou 23, de façon à maintenir le tube d'irrigation 25 sensiblement dégagé. En d'autres termes, les moyens de guidage permettent d'éviter que les racines n'obstruent le tube d'irrigation 25.

En référence aux figures 2 à 8, les moyens de guidage peuvent comprendre au moins une nervure 3 adaptée pour guider les racines d'un végétal, cette nervure 3 faisant saillie vers l'intérieur du récipient 2.

La nervure 3 peut entourer partiellement le trou 23 en laissant une ouverture 31 permettant aux racines Il de tourner autour du trou 23 en suivant les moyens de guidage. L'ouverture 31 permet aux racines Il de sortir après que celles-ci ont grandi en suivant sensiblement les moyens de guidage.

Sur la figure 2 sont représentés le diamètre d du trou 23, la largeur L de l'ouverture 31, ainsi que l'angle α du secteur angulaire ayant pour sommet le centre O du trou 23 et délimité par des demi droites passant par les extrémités de l'ouverture 31. Dans ce mode de réalisation, on a par exemple L/d compris entre 1 et 2, par exemple voisin de 1,5. Quand à α, il peut être compris entre 45° et 65°, par exemple voisin de 55°.

Selon un mode de réalisation présenté figure 2, les moyens de guidage comprennent une nervure 3 sensiblement en forme de fer à cheval. La nervure 3 en forme de fer à cheval comprend une portion incurvée 32 positionnée autour du trou 23, pouvant prendre la forme d'une portion de cercle s'étendant sur plus d'un demi tour, par exemple sur trois quarts de tour. La portion incurvée 32 présente deux extrémités. De plus, la nervure 3 comprend deux branches 33 sensiblement parallèles prolongeant chacune une extrémité de la portion incurvée 32, de sorte que l'ouverture 31 forme un rétrécissement de section.

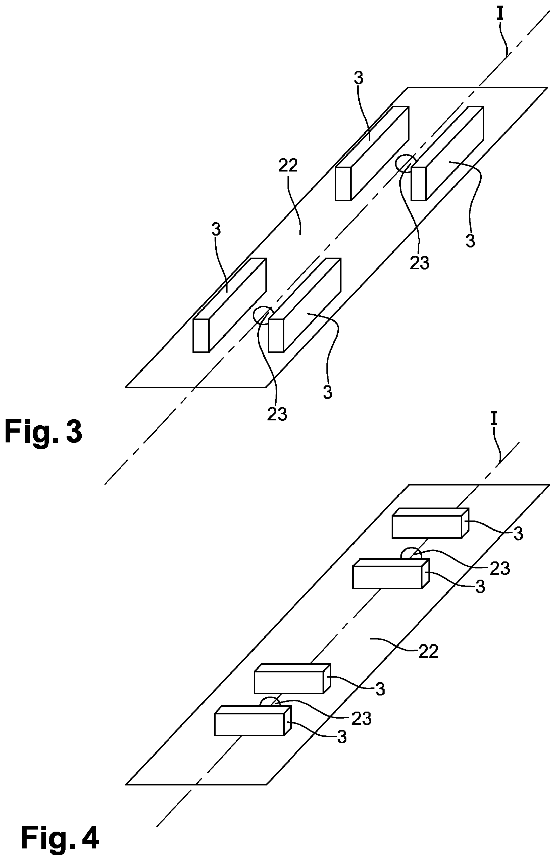

Selon d'autres modes de réalisation présentés sur les figures 3 à 8, chaque nervure 3 présente une géométrie sensiblement rectiligne.

En référence aux figures 3 et 4, qui ne font pas partie de l'invention, les moyens de guidage peuvent comprendre deux nervures 3 rectilignes, parallèles entre elles et disposés de part et d'autre du trou 23. Les nervures 3 peuvent être parallèles à l'axe longitudinal I (comme représenté sur la figure 3) ou peuvent être sensiblement perpendiculaires à l'axe longitudinal I (comme représenté sur la figure 4).

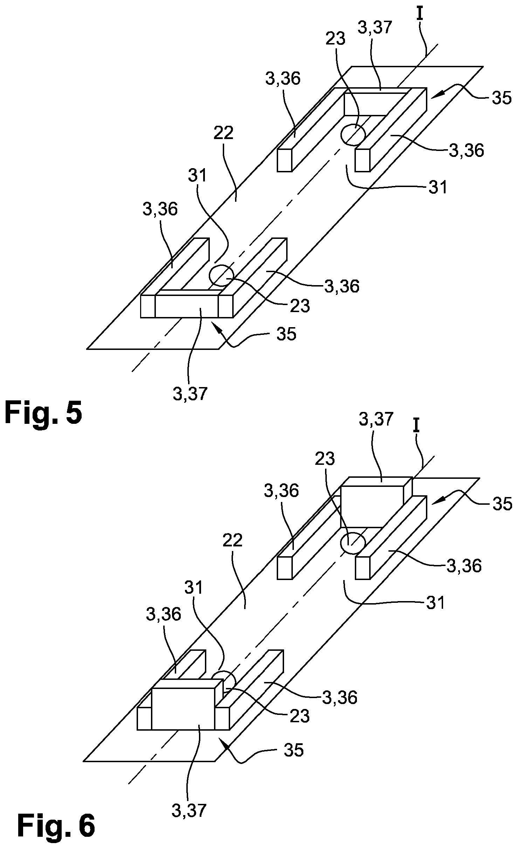

Selon d'autres modes de représentés sur les figures 5 à 8, les moyens de guidage peuvent comprendre trois nervures 3 sensiblement rectilignes, agencées pour former sensiblement un U 35. Le U 35 peut comprendre deux nervures latérales 36 et une nervure de base 37. Le U 35 présente une ouverture 31.

Selon le mode de réalisation présenté figure 6, la nervure de base 37 peut présenter une hauteur par rapport à la paroi de fond 22 supérieure à la hauteur des nervures latérales 36 par rapport à la paroi de fond 22.

Selon les modes de réalisations présentés aux figures 5 et 6, les U 35 sont orientés de sorte que leurs nervures de base 37 sont perpendiculaires à l'axe longitudinal I et leurs ouvertures 31 se font face.

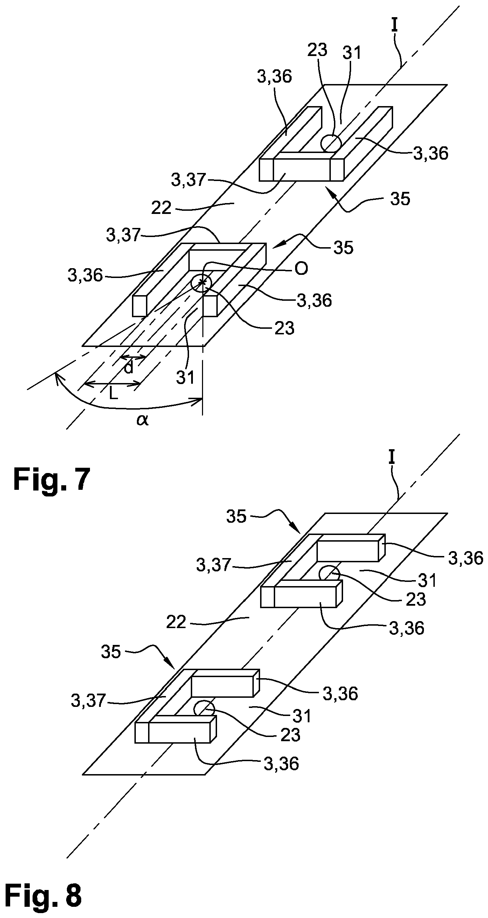

Selon le mode de réalisation présenté sur la figure 7, les U 35 sont orientés de sorte que leurs nervures de base 37 sont perpendiculaires à l'axe longitudinal I et leurs ouvertures 31 sont opposées l'une part rapport à l'autre.

Sur la figure 7 sont représentés le diamètre d du trou 23, la largeur L de l'ouverture 31, ainsi que l'angle α du secteur angulaire ayant pour sommet le centre O du trou 23 et délimité par des demi droites passant par les extrémités de l'ouverture 31. Dans ce mode de réalisation, on a par exemple L/d compris entre 2 et 2,7, par exemple voisin de 2,5. Quand à α, il peut être compris entre 55° et 90°, par exemple voisin de 70°.

Selon le mode de réalisation présenté sur la figure 8, les U 35 sont orientés de sorte que leurs nervures de base 37 sont parallèles à l'axe longitudinal I, les ouvertures 31 étant situées d'un même côté.

Chaque nervure 3 peut présenter au moins une face oblique (non représentée) par rapport à la paroi de fond. La face oblique permet de faciliter le trajet des racines en leur permettant de passer au-dessus de la nervure 3.

Les moyens de guidage peuvent comprendre une collerette 39 qui encercle le trou 23. La collerette 39 permet de détourner les racines Il du trou 23.

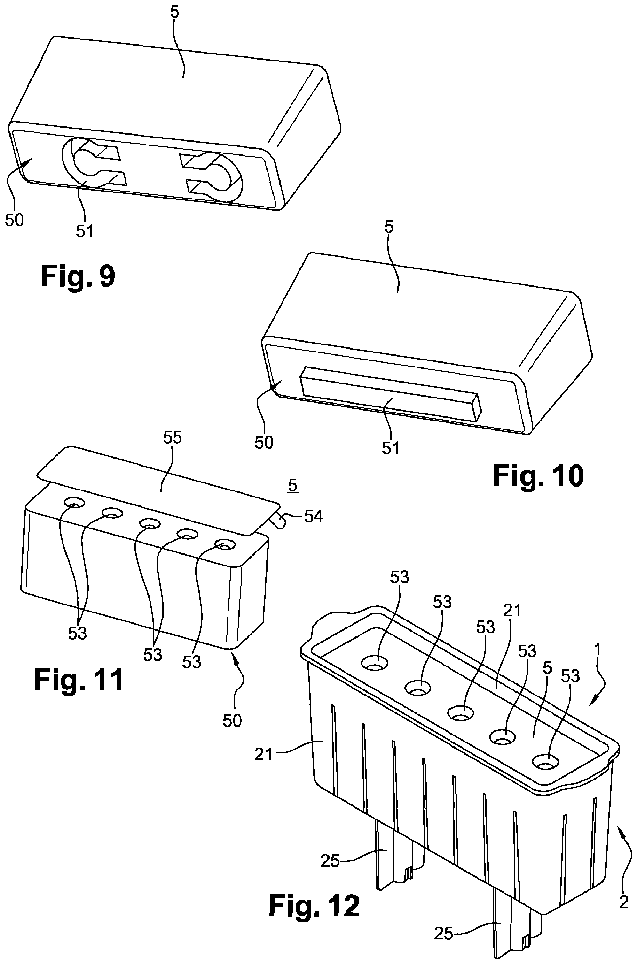

L'invention porte aussi sur une cartouche 5 comprenant un substrat, représentée sur la figure 9. La cartouche 5 est adaptée pour être positionnée dans un récipient 2 selon l'invention. La cartouche 5 présente une face inférieure 50 qui comprend plusieurs reliefs 51 adaptés pour coopérer avec les moyens de guidage.

Chacun de ces reliefs 51 peut être une empreinte, selon le mode de réalisation illustré sur la figure 9, ou une saillie, selon le mode de réalisation illustré sur la figure 10.

En outre, comme représenté sur la figure 9, le relief 51 peut présenter une géométrie complémentaire de la géométrie des moyens de guidage. Selon l'exemple représenté figure 9, les reliefs 51 sont des empreintes en forme de fer à cheval correspondant à la géométrie de la nervure 3 en forme de fer à cheval décrites précédemment.

Cependant, en référence à la figure 10, un unique relief 51 sous forme d'un bloc en saillie depuis la face inférieure 50 de la cartouche 5, bien que n'ayant pas une forme complémentaire de celle des deux moyens de guidage en forme de fer à cheval dont les ouvertures se font face, peut tout à fait coopérer avec le récipient illustré sur la figure 1, en venant s'insérer entre les deux moyens de guidage. Bien entendu, une telle cartouche 5 peut également coopérer avec les récipients 2 illustrés sur les figures 3, 4, 5 et 6.

La cartouche 5 peut comprendre au moins une semence végétale, telle qu'une graine.

La semence végétale peut être mélangée au substrat, l'ensemble pouvant former une sorte de bloc d'aspect extérieur homogène, prêt à l'emploi. En variante, la semence végétale peut être plantée par l'utilisateur du système 100.

Selon encore une autre possibilité, comme représenté sur la figure 11, chaque semence végétale peut être disposée dans au moins un logement 53 débouchant à l'extérieur de la cartouche 5.Chaque logement peut être obturé par un opercule sous la forme d'une feuille 55 présentant au moins un point de colle permettant de fixer la feuille 55 à la cartouche 5. De préférence, la feuille 55 est exempte de colle au droit des logements 53. La feuille 55 peut comporter une languette 54 facilitant sa manipulation lors de la fabrication et lors de l'utilisation de la cartouche 5.

Chaque semence végétale peut être collée dans le logement 53 correspondant pour assurer son maintien. Ceci peut être particulièrement utile pour une graine de petite taille, afin d'éviter qu'elle ne glisse entre l'opercule 55 et le substrat. En variante, les graines de petite taille peuvent être enrobées (selon un processus habituel connu dans le métier des semenciers) afin de garantir qu'elles ne puissent pas quitter leur logement 53.

En outre, la cartouche 5 peut comprendre au moins un produit fertilisant, tel qu'un engrais azoté, un engrais organique ou un engrais minéral.

En référence aux figures 12 et 13, l'invention porte aussi sur un ensemble 10 qui comprend d'une part un dispositif 1 de culture végétale comprenant un récipient 2, et d'autre part une cartouche 5 comportant un substrat. Au moins l'un du récipient et de la cartouche 5 est conforme à la description qui précède.

Le fait de disposer dans un récipient 2 une cartouche 5 dont la face inférieure 50 comprend un relief 51 coopérant avec les moyens de guidage du récipient 2 permet d'obtenir un « emboîtement » de la cartouche 5 dans le récipient 2. Selon les formes relatives du relief 51 et des moyens de guidage, tout ou partie de la face inférieure 50 de la cartouche peut être en contact avec la paroi de fond 22 du récipient 2, ce qui améliore le transfert d'eau vers les graines et augmente le volume de la cartouche qui peut être logée dans le récipient 2. Ces avantages sont d'autant plus importants si les reliefs 51 et les moyens de guidage ont des formes correspondantes.

Ainsi, l'invention propose un dispositif de culture végétal, une cartouche, un ensemble et un système de culture végétale qui permettent de maintenir les tubes d'irrigation sensiblement dégagés des racines, garantissant ainsi une grande efficacité de l'alimentation en eau et un retrait aisé des cartouches après emploi.

Bien entendu, l'invention n'est nullement limitée aux modes de réalisations décrits ci-dessus et illustrés par les différentes figures, ces modes de réalisation n'ayant été donnés qu'à titre d'exemple. Des modifications restent possibles notamment du point de vue de la constitution des divers éléments techniques. L'invention est définie par les revendications annexées.

## Revendications

1. Dispositif (1) de culture végétale, comprenant un récipient (2) qui présente au moins une paroi périphérique (21) et une paroi de fond (22), lequel récipient comporte au moins un tube d'irrigation pouvant contenir une mèche permettant la remontée d'eau par capillarité, le ou chaque tube d'irrigation débouchant dans un trou (23) ménagé dans la paroi de fond (22), une région de la paroi de fond (22) autour du, ou de chaque, trou (23) comprenant des moyens de guidage adaptés pour guider des racines d'un végétal autour du trou (23) correspondant pour maintenir le tube d'irrigation (25) sensiblement dégagé, les moyens de guidage comprenant au moins une nervure (3) adaptée pour guider les racines d'un végétal, la ou chaque nervure (3) faisant saillie de la paroi de fond (22) vers l'intérieur du récipient (2), au moins une nervure (3) entourant partiellement le trou (23) correspondant en créant une zone qui entoure le trou (23) et en laissant une ouverture (31), de sorte à permettre aux racines de tourner autour du trou (23) en suivant sensiblement la ou chaque nervure (3) puis de sortir des moyens de guidage.

2. Dispositif (1) selon la revendication 1, **caractérisé en ce que** le rapport L/d de la largeur (L) de l'ouverture (31) sur le diamètre (d) du trou (23) est compris entre L/d min et L/d max, où L/d min vaut 1, de préférence 1,3, et L/d max vaut 2,7, de préférence 2,5, de préférence 2.

3. Dispositif (1) selon la revendication 1 ou 2, **caractérisé en ce que** le secteur angulaire ayant pour sommet le centre (O) du trou (23) et délimité par des demi droites passant par les extrémités de l'ouverture (31) forme un angle (α) compris entre αmin et αmin, où αmin vaut 35°, de préférence 45°, de préférence 55°, et αmax vaut 90°, de préférence 80°, de préférence 70°.

4. Dispositif (1) selon l'une des revendications 1 à 3 **caractérisé en ce qu'**au moins une nervure (3) présente une géométrie sensiblement en forme de fer à cheval.

5. Dispositif (1) selon la revendication 4, **caractérisé en ce que** la, ou chaque, nervure (3) sensiblement en forme de fer à cheval comprend une portion incurvée (32) positionnée autour du trou (23) et présentant deux extrémités, et deux branches (33) sensiblement parallèles prolongeant chacune une extrémité de la portion incurvée (32), de sorte que l'ouverture (31) forme un rétrécissement de section.

6. Dispositif (1) selon l'une des revendications 1 à 5, **caractérisé en ce qu'**au moins une nervure (3) présente une géométrie sensiblement rectiligne, les moyens de guidage comprenant de préférence trois nervures (3) sensiblement rectilignes, agencées pour former sensiblement un U (35).

7. Dispositif (1) selon l'une des revendications 1 à 6, **caractérisé en ce que** les moyens de guidage comprennent une collerette (39) encerclant le trou (23).

8. Cartouche (5) comprenant un substrat, **caractérisée en ce qu'**elle est adaptée pour être positionnée dans le récipient (2) d'un dispositif selon l'une des revendications 1 à 7, la cartouche (5) présentant une face inférieure (50) comprenant au moins un relief (51) adapté pour coopérer avec les moyens de guidage du récipient (2).

9. Cartouche (5) selon la revendication 8, **caractérisée en ce que** le relief (51) est au moins partiellement logé dans, ou loge au moins en partie, les moyens de guidage, le relief (51) occupant de préférence au moins partiellement la zone qui entoure le trou (23).

10. Cartouche (5) selon la revendication 8 ou 9, **caractérisée en ce qu'**au moins un relief (51) est une empreinte, ou **en ce qu'**au moins un relief (51) est une saillie.

11. Cartouche (5) selon l'une des revendications 8 à 10, **caractérisée en ce qu'**au moins un relief (51) présente une géométrie complémentaire de la géométrie des moyens de guidage.

12. Cartouche (5) selon la revendication 11, **caractérisée en ce qu'**au moins un relief présente une empreinte sensiblement en forme de fer à cheval complémentaire de la géométrie de la nervure (3) sensiblement en forme de fer à cheval.

13. Cartouche (5) selon l'une des revendications 8 à 12, **caractérisée en ce que** la cartouche (5) comprend au moins une semence végétale, la, ou chaque, semence végétale étant disposée dans au moins un logement (53) débouchant à l'extérieur de la cartouche (5), le, ou chaque, logement (53) étant de préférence obturé par un opercule (55) fixé à la cartouche (5).

14. Ensemble (10) **caractérisé en ce qu'**il comprend un dispositif (1) selon l'une des revendications 1 à 7 et une cartouche (5), la cartouche pouvant être conforme à l'une des revendications 8 à 13.

15. Système (100) de culture végétale **caractérisé en ce qu'**il comprend :
- un bac (101) présentant une ouverture supérieure, le bac étant destiné à contenir de l'eau ;
- un plateau (102) disposé au niveau de l'ouverture supérieure du bac (101) et présentant une fenêtre (103) ;
- au moins un mât (104) supportant au moins une source lumineuse (105) ;
- au moins un ensemble (10) selon la revendication 14, disposé dans le bac (101) et reçu dans la fenêtre (103).

## Patentansprüche

1. Vorrichtung (1) zur Pflanzenzucht, umfassend einen Behälter (2), der mindestens eine Umfangswand (21) und eine Bodenwand (22) aufweist, wobei der Behälter wenigstens ein Bewässerungsrohr umfasst, das einen Docht enthalten kann, der das Aufsteigen von Wasser durch Kapillarwirkung ermöglicht, wobei das oder jedes Bewässerungsrohr in ein Loch (23) in der Bodenwand (22) mündet, wobei ein Bereich der Bodenwand (22) um das oder jedes Loch (23) herum Führungsmittel umfasst, die geeignet sind, die Wurzeln einer Pflanze um das entsprechende Loch (23) herum zu führen, um das Bewässerungsrohr (25) im Wesentlichen frei zu halten, wobei die Führungsmittel mindestens eine Rippe (3) umfassen, die zum Führen von Wurzeln einer Pflanze geeignet ist, wobei die oder jede Rippe (3) von der Bodenwand (22) in das Innere des Behälters (2) vorsteht, wobei mindestens eine Rippe (3) das entsprechende Loch (23) teilweise umgibt, indem sie einen Bereich schafft, der das Loch (23) umgibt und eine Öffnung (31) hinterlässt, so dass die Wurzeln sich um das Loch (23) drehen können, indem sie im Wesentlichen der oder jeder Rippe (3) folgen, und dann aus den Führungsmitteln austreten können.

2. Vorrichtung (1) nach Anspruch 1, **dadurch gekennzeichnet, dass** das Verhältnis L/d der Breite (L) der Öffnung (31) zum Durchmesser (d) des Lochs (23) zwischen L/d min und L/d max liegt, wobei L/d min 1, vorzugsweise 1,3, und L/d max 2,7, vorzugsweise 2,5, vorzugsweise 2 beträgt.

3. Vorrichtung (1) nach Anspruch 1 oder 2, **dadurch gekennzeichnet, dass** der Winkelsektor, dessen Scheitelpunkt der Mittelpunkt (O) des Lochs (23) ist und der von Halbgeraden begrenzt wird, die durch die Enden der Öffnung (31) verlaufen, einen Winkel (α) bildet, der zwischen αmin und αmin liegt, wobei αmin 35°, vorzugsweise 45°, vorzugsweise 55° beträgt, und αmax 90°, vorzugsweise 80°, vorzugsweise 70° beträgt.

4. Vorrichtung (1) nach einem der Ansprüche 1 bis 3, **dadurch gekennzeichnet, dass** mindestens eine Rippe (3) eine im Wesentlichen hufeisenförmige Geometrie aufweist.

5. Vorrichtung (1) nach Anspruch 4, **dadurch gekennzeichnet, dass** die oder jede im Wesentlichen hufeisenförmige Rippe (3) einen gekrümmten Abschnitt (32) umfasst, der um das Loch (23) herum positioniert ist, und zwei Enden und zwei im Wesentlichen parallele Schenkel (33) aufweist, die jeweils ein Ende des gekrümmten Abschnitts (32) verlängern, so dass die Öffnung (31) eine Querschnittsverengung bildet.

6. Vorrichtung (1) nach einem der Ansprüche 1 bis 5, **dadurch gekennzeichnet, dass** mindestens eine Rippe (3) eine im Wesentlichen geradlinige Geometrie aufweist, wobei die Führungsmittel vorzugsweise drei im Wesentlichen geradlinige Rippen (3) umfassen, die so angeordnet sind, dass sie im Wesentlichen ein U (35) bilden.

7. Vorrichtung (1) nach einem der Ansprüche 1 bis 6, **dadurch gekennzeichnet, dass** die Führungsmittel einen Kragen (39) umfassen, der das Loch (23) umgibt.

8. Kartusche (5), umfassend ein Substrat, **dadurch gekennzeichnet, dass** sie dazu geeignet ist, in dem Behälter (2) einer Vorrichtung nach einem der Ansprüche 1 bis 7 positioniert zu werden, wobei die Kartusche (5) eine Unterseite (50) umfasst, umfassend mindestens ein Relief (51), die dazu geeignet ist, mit den Führungsmitteln des Behälters (2) zusammenzuwirken.

9. Kartusche (5) nach Anspruch 8, **dadurch gekennzeichnet, dass** das Relief (51) zumindest teilweise in den Führungsmitteln untergebracht ist oder diese zumindest teilweise aufnimmt, wobei das Relief (51) vorzugsweise zumindest teilweise den Bereich einnimmt, der das Loch (23) umgibt.

10. Kartusche (5) nach Anspruch 8 oder 9, **dadurch gekennzeichnet, dass** mindestens ein Relief (51) eine Vertiefung ist, oder dass mindestens ein Relief (51) eine Erhebung ist.

11. Kartusche (5) nach einem der Ansprüche 8 bis 10, **dadurch gekennzeichnet, dass** mindestens ein Relief (51) eine Geometrie aufweist, die komplementär zur Geometrie der Führungsmittel ist.

12. Kartusche (5) nach Anspruch 11, **dadurch gekennzeichnet, dass** mindestens ein Relief eine im Wesentlichen hufeisenförmige Prägung aufweist, die komplementär zur Geometrie der im Wesentlichen hufeisenförmigen Rippe (3) ist.

13. Kartusche (5) nach einem der Ansprüche 8 bis 12, **dadurch gekennzeichnet, dass** die Kartusche (5) mindestens einen Pflanzensamen enthält, wobei der oder jeder Pflanzensamen in mindestens einer Aufnahme (53) angeordnet ist, die an der Außenseite der Kartusche (5) mündet, wobei die oder jede Aufnahme (53) vorzugsweise durch einen an der Kartusche (5) befestigten Deckel (55) verschlossen ist.

14. Set (10), **dadurch gekennzeichnet, dass** es eine Vorrichtung (1) nach einem der Ansprüche 1 bis 7 und eine Kartusche (5) umfasst, wobei die Kartusche einem der Ansprüche 8 bis 13 entsprechen kann.

15. System (100) zur Pflanzenzucht, **dadurch gekennzeichnet, dass** es Folgendes umfasst:
- eine Wanne (101), die eine obere Öffnung aufweist, wobei die Wanne dazu bestimmt ist, Wasser zu enthalten;
- ein Tablett (102), das auf Höhe der oberen Öffnung des Behälters (101) angeordnet ist und ein Fenster (103) aufweist;
- mindestens einen Mast (104), der mindestens eine Lichtquelle (105) trägt;
- mindestens ein Set (10) nach Anspruch 14, das in der Wanne (101) angeordnet und in dem Fenster (103) aufgenommen ist.

## Claims

1. A plant cultivation device (1), comprising a receptacle (2) having at least one peripheral wall (21) and a bottom wall (22), said receptacle (2) comprising at least one irrigation tube which may contain a wick enabling the rise of water by capillarity, the or each irrigation tube opening into a hole (23) arranged in the bottom wall (22), a region of the bottom wall (22) around the, or each, hole (23) comprising guide means adapted to guide roots of a plant around the corresponding hole (23) to keep the irrigation tube (25) substantially clear, the guide means comprising at least one rib (3) adapted to guide the roots of a plant, the or each rib (3) projecting from the bottom wall (22) towards the inside of the receptacle (2), at least one rib (3) partially surrounding the corresponding hole (23) by creating an area which surrounds the hole (23) and by leaving an opening (31), so as to enable the roots to rotate around the hole (23) by substantially following the or each rib (3) then to come out from the guide means.

2. The device (1) according to claim 1, **characterized in that** the ratio L/d of the width (L) of the opening (31) to the diameter (d) of the hole (23) is comprised between L/d min and L/d max, where L/d min is equal to 1, preferably 1.3, and L/d max is equal to 2.7, preferably 2.5, preferably 2.

3. The device (1) according to claim 1 or 2, **characterized in that** the angular sector having as a vertex the center (O) of the hole (23) and delimited by half-lines passing through the ends of the opening (31) forms an angle (α) comprised between αmin and αmin, where αmin is equal to 35°, preferably 45°, preferably 55°, and αmax is equal to 90°, preferably 80°, preferably 70°.

4. The device (1) according to any of claims 1 to 3, **characterized in that** at least one rib (3) has a substantially horseshoe-like shaped geometry.

5. The device (1) according to claim 4, **characterized in that** the, or each, substantially horseshoe-like shaped rib (3) comprises a curved portion (32) positioned around the hole (23) and having two ends, and two substantially parallel branches (33) each forming an extension of one end of the curved portion (32), so that the opening (31) forms a section narrowing.

6. The device (1) according to any of claims 1 to 5, **characterized in that** at least one rib (3) has a substantially rectilinear geometry, the guide means preferably comprising three substantially rectilinear ribs (3), arranged to substantially form a U-shape (35).

7. The device (1) according to any of claims 1 to 6, **characterized in that** the guide means comprise a collar (39) encircling the hole (23).

8. A cartridge (5) comprising a substrate, **characterized in that** it is adapted to be positioned in a receptacle (2) according to any of claims 1 to 7, the cartridge (5) having a lower face (50) comprising at least one relief (51) adapted to cooperate with the guide means of the receptacle (2).

9. The cartridge (5) according to claim 8, **characterized in that** the relief (51) is at least partially housed within, or at least partly houses, the guide means, the relief (51) occupying preferably at least partially the area that surrounds the hole (23).

10. The cartridge (5) according to claim 8 or 9, **characterized in that** at least one relief (51) is an imprint, or **in that** at least one relief (51) is a projection.

11. The cartridge (5) according to any of claims 8 to 10, **characterized in that** at least one relief (51) has a geometry complementary to the geometry of the guide means.

12. The cartridge (5) according to claim 11, **characterized in that** at least one relief has a substantially horseshoe-like shaped imprint complementary to the geometry of the substantially horseshoe-like shaped rib (3).

13. The cartridge (5) according to any of claims 8 to 12, **characterized in that** the cartridge (5) comprises at least one plant seed, the, or each, plant seed being disposed in at least one housing (53) opening to the outside of the cartridge (5), the, or each, housing (53) preferably being sealed by a lid (55) fastened to the cartridge (5).

14. A set (10) **characterized in that** it comprises a device (1) according to any of claims 1 to 7 and a cartridge (5), which cartridge may be in accordance with any of claims 8 to 13.

15. A plant cultivation system (100) **characterized in that** it comprises:
- a tank (101) having an upper opening, the tank being intended to contain water;
- a tray (102) disposed at the level of the upper opening of the tank (101) and having an aperture (103);
- at least one mast (104) supporting at least one light source (105);
- at least one set (10) according to claim 19, disposed in the tank (101) and received in the aperture (103).
